# EUROPEAN PATENT APPLICATION

(11) **EP 4 451 124 A1**
(43) Date of publication of application: **23.10.2024**
(21) Application number: 21968288.7
(22) Date of filing: 17.12.2021
(51) Int. Cl.: G06F 9/455

(54) **SIGNAL PROCESSING DEVICE AND VEHICLE DISPLAY DEVICE COMPRISING SAME**

(71) Applicant: LG Electronics Inc., Yeongdeungpo-gu Seoul 07336 (KR)
(72) Inventor: LEE, Chulhee, Seoul 06772 (KR); JUNG, Junyoung, Seoul 06772 (KR); LEE, Eunkoo, Seoul 06772 (KR); LEE, Dongkyu, Seoul 06772 (KR)
(74) Representative: Vossius & Partner Patentanwälte Rechtsanwälte mbB
(86) International application number: PCT/KR2021/019305
(87) International publication number: WO 2023/113079

(57) **Abstract**

A signal processing device and a vehicle display apparatus including the same are disclosed. The signal processing device includes a processor configured to perform signal processing for a display installed in a vehicle, wherein the processor is configured to execute first and second virtual machines, the first virtual machine operating as a server virtual machine and the second virtual machine operating as a guest virtual machine, wherein at least one of the first virtual machine and the second virtual machine is configured to: execute a shared container and at least one service container on a container engine; and add a shared layer in the shared container to the at least one service container before executing the at least one service container, execute the at least one service container after adding the shared layer, and retrieve the shared layer after terminating the execution of the at least one service container. Accordingly, service container-based application may be executed efficiently.

## Description

### BACKGROUND

### 1. Technical Field

The present disclosure relates to a signal processing device and a vehicle display apparatus including the same, and more particularly to a signal processing device capable of efficiently executing service container-based application, and a vehicle display apparatus including the signal processing device.

### 2. Description of the Related Art

A vehicle is a device that allows a user to move in desired directions. A typical example of the vehicle is a car.

Meanwhile, a vehicle display apparatus is mounted in the vehicle for user convenience.

For example, a display mounted on a cluster and the like displays a variety of information. Meanwhile, in order to display vehicle driving information and the like, various displays, such as an Audio Video Navigation (AVN) display, etc., are mounted in the vehicle separately from the cluster.

In addition, research is conducted to provide various application services by using the vehicle display apparatus.

U.S. Patent Publication No. US20190250610 (hereinafter referred to as a related art) discloses systems and methods for scalable architecture in vehicular environments.

However, the related art has a problem in that in order to provide various application services, it is required to store all data related to the respective applications and use the data while running the applications, thereby leading to an increase in required storage capacity and a decrease in signal processing efficiency.

### SUMMARY

It is an object of the present disclosure to provide a signal processing device capable of efficiently executing service container-based application, and a vehicle display apparatus including the signal processing device.

Meanwhile, it is another object of the present disclosure to provide a signal processing device capable of efficiently executing applications by using a shared container, and a vehicle display apparatus including the signal processing device.

Meanwhile, it is yet another object of the present disclosure to provide a signal processing device capable of minimizing a storage space required for installing service containers, and a vehicle display apparatus including the signal processing device.

Meanwhile, it is further another object of the present disclosure to provide a signal processing device capable of efficiently executing service container-based application even when a plurality of virtual machines execute on different operating systems.

In accordance with an aspect of the present disclosure, the above and other objects can be accomplished by providing a signal processing device according to an embodiment of the present disclosure, the signal processing device including a processor configured to perform signal processing for a display installed in a vehicle, wherein the processor is configured to execute first and second virtual machines, the first virtual machine operating as a server virtual machine and the second virtual machine operating as a guest virtual machine, wherein at least one of the first virtual machine and the second virtual machine is configured to: execute a shared container and at least one service container on a container engine; and add a shared layer in the shared container to the at least one service container before executing the at least one service container, execute the at least one service container after adding the shared layer, and retrieve the shared layer after terminating the execution of the at least one service container.

Meanwhile, the second virtual machine may be configured to execute the shared container and at least one service container.

Meanwhile, the signal processing device may be configured to: in response to a first service container and a second service container being executed among the at least one service container, add a first shared layer and a second shared layer in the shared container to the first service container and the second service container, respectively; and after adding the first service container and the second service container, execute the first service container and the second service container, and after terminating the execution of the first service container and the second service container, retrieve the first shared layer and the second shared layer.

Meanwhile, the signal processing device may be configured to: in response to a first service container and a second service container being executed among the at least one service container, add a common shared layer in the shared container to each of the first service container and the second service container; and after adding the common shared layer, execute the first service container and the second service container, and after terminating the execution of the first service container and the second service container, retrieve the common shared layer.

Meanwhile, the signal processing device may be configured to: in response to there being no detection engine layer in a camera service container among the at least one service container, access a video device; and in response to there being a detection engine layer in a camera service container among the at least one service container, access the video device by using a detection engine in the detection engine layer.

Meanwhile, in response to there being no detection engine layer in the camera service container among the at least one service container, the signal processing device may be configured to add a detection engine layer in the shared container to the camera service container, and to access the video device by using the detection engine in the detection engine layer.

Meanwhile, the shared container may be configured to provide the shared layer to only service containers of a first group among a plurality of service containers, without providing the shared layer to service containers of groups other than the first group.

Meanwhile, the processor may be configured to execute a container manager for managing the at least one service container, wherein the shared container may be configured to execute a data share application.

Meanwhile, the service container manager may be configured to perform at least one of lifecycle management, execution time management, management during execution, and management within groups, of the at least one service container.

Meanwhile, the data share application may allow sharing, or restrict access to, a specific layer among containers within a group.

Meanwhile, the shared container may include a monitor service layer and may provide the monitor service layer to the at least one service container.

Meanwhile, the shared container may include a network interface layer and may provide the network interface layer to the at least one service container, wherein the service container provided with the network interface layer may transmit data to another virtual machine or another signal processing device by using the network interface layer.

Meanwhile, the shared container may provide a shared layer, including Augmented Reality (AR) data, Virtual Reality (VR) data, Mixed Reality (MR) data, to the at least one service container.

Meanwhile, the shared layer in the shared container may include binary, library, and configuration files that are required for applications.

Meanwhile, the service container may include a base image layer, the shared layer on the based image layer, and a writable layer on the shared layer.

Meanwhile, the processor may be configured to execute a hypervisor and to execute first to third virtual machines on the hypervisor.

Meanwhile, the processor may be configured to execute a container engine in the second virtual machine and to execute the service container on the container engine.

Meanwhile, the processor may be configured to download the first service container from a server and install the first service container, and to add the shared layer to the first service container.

Meanwhile, the second virtual machine and the third virtual machine may execute on different operating systems.

In accordance with another aspect of the present disclosure, there is provided a vehicle display apparatus including: a first display; a second display; and a signal processing device including a processor configured to perform signal processing for the first display and the second display, wherein the signal processing device includes a processor configured to perform signal processing for a display installed in a vehicle, wherein the processor is configured to execute first and second virtual machines, the first virtual machine operating as a server virtual machine and the second virtual machine operating as a guest virtual machine, wherein at least one of the first virtual machine and the second virtual machine is configured to: execute a shared container and at least one service container on a container engine; and add a shared layer in the shared container to the at least one service container before executing the at least one service container, execute the at least one service container after adding the shared layer, and retrieve the shared layer after terminating the execution of the at least one service container.

### EFFECT OF THE DISCLOSURE

A signal processing device according to an embodiment of the present disclosure includes a processor configured to perform signal processing for a display installed in a vehicle, wherein the processor is configured to execute first and second virtual machines, the first virtual machine operating as a server virtual machine and the second virtual machine operating as a guest virtual machine, wherein at least one of the first virtual machine and the second virtual machine is configured to: execute a shared container and at least one service container on a container engine; and add a shared layer in the shared container to the at least one service container before executing the at least one service container, execute the at least one service container after adding the shared layer, and retrieve the shared layer after terminating the execution of the at least one service container. Accordingly, service container-based application may be executed efficiently. Particularly, applications may be executed efficiently by using the shared container. In addition, a storage space required for installing the service containers may be minimized.

Meanwhile, the second virtual machine may be configured to execute the shared container and at least one service container. Accordingly, service container-based application may be executed efficiently.

Meanwhile, the signal processing device may be configured to: in response to a first service container and a second service container being executed among the at least one service container, add a first shared layer and a second shared layer in the shared container to the first service container and the second service container, respectively; and after adding the first service container and the second service container, execute the first service container and the second service container, and after terminating the execution of the first service container and the second service container, retrieve the first shared layer and the second shared layer. Accordingly, applications may be executed efficiently by using the shared container.

Meanwhile, the signal processing device may be configured to: in response to a first service container and a second service container being executed among the at least one service container, add a common shared layer in the shared container to each of the first service container and the second service container; and after adding the common shared layer, execute the first service container and the second service container, and after terminating the execution of the first service container and the second service container, retrieve the common shared layer. Accordingly, applications may be executed efficiently by using the shared container.

Meanwhile, the signal processing device may be configured to: in response to there being no detection engine layer in a camera service container among the at least one service container, access a video device; and in response to there being a detection engine layer in a camera service container among the at least one service container, access the video device by using a detection engine in the detection engine layer. Accordingly, service container-based application may be executed efficiently.

Meanwhile, in response to there being no detection engine layer in the camera service container among the at least one service container, the signal processing device may be configured to add a detection engine layer in the shared container to the camera service container, and to access the video device by using the detection engine in the detection engine layer. Accordingly, applications may be executed efficiently by using the shared container.

Meanwhile, the shared container may be configured to provide the shared layer to only service containers of a first group among a plurality of service containers, without providing the shared layer to service containers of groups other than the first group. Accordingly, applications within the same group may be executed efficiently by using the shared container.

Meanwhile, the processor may be configured to execute a container manager for managing the at least one service container, wherein the shared container may be configured to execute a data share application. Accordingly, applications may be executed efficiently by using the shared container.

Meanwhile, the service container manager may be configured to perform at least one of lifecycle management, execution time management, management during execution, and management within groups, of the at least one service container. Accordingly, service container-based application may be executed efficiently.

Meanwhile, the data share application may allow sharing, or restrict access to, a specific layer among containers within a group. Accordingly, service container-based application may be executed efficiently. Particularly, applications may be executed efficiently by using the shared container.

Meanwhile, the shared container may include a monitor service layer and may provide the monitor service layer to the at least one service container. Accordingly, applications may be executed efficiently by using the shared container.

Meanwhile, the shared container may include a network interface layer and may provide the network interface layer to the at least one service container, wherein the service container provided with the network interface layer may transmit data to another virtual machine or another signal processing device by using the network interface layer. Accordingly, applications may be executed efficiently by using the shared container.

Meanwhile, the shared container may provide a shared layer, including Augmented Reality (AR) data, Virtual Reality (VR) data, Mixed Reality (MR) data, to the at least one service container. Accordingly, applications may be executed efficiently by using the shared container.

Meanwhile, the shared layer in the shared container may include binary, library, and configuration files that are required for applications. Accordingly, applications may be executed efficiently by using the shared container.

Meanwhile, the service container may include a base image layer, the shared layer on the based image layer, and a writable layer on the shared layer. Accordingly, service container-based application may be executed efficiently.

Meanwhile, the processor may be configured to execute a hypervisor and to execute first to third virtual machines on the hypervisor. Accordingly, the plurality of virtual machines may be executed efficiently.

Meanwhile, the processor may be configured to execute a container engine in the second virtual machine and to execute the service container on the container engine. Accordingly, the service container may be executed efficiently.

Meanwhile, the processor may be configured to download the first service container from a server and install the first service container, and to add the shared layer to the first service container. Accordingly, the first service container may be installed and executed efficiently. In addition, a storage space required for installing the first service container may be minimized.

Meanwhile, the second virtual machine and the third virtual machine may execute on different operating systems. Meanwhile, service container-based application may be executed efficiently even when the plurality of virtual machines execute on different operating systems.

In accordance with another aspect of the present disclosure, there is provided a vehicle display apparatus including: a first display; a second display; and a signal processing device including a processor configured to perform signal processing for the first display and the second display, wherein the signal processing device includes a processor configured to perform signal processing for a display installed in a vehicle, wherein the processor is configured to execute first and second virtual machines, the first virtual machine operating as a server virtual machine and the second virtual machine operating as a guest virtual machine, wherein at least one of the first virtual machine and the second virtual machine is configured to: execute a shared container and at least one service container on a container engine; and add a shared layer in the shared container to the at least one service container before executing the at least one service container, execute the at least one service container after adding the shared layer, and retrieve the shared layer after terminating the execution of the at least one service container. Accordingly, service container-based application may be executed efficiently. Particularly, applications may be executed efficiently by using the shared container. In addition, a storage space required for installing the service containers may be minimized.

### BRIEF DESCRIPTION OF THE DRAWINGS

FIG. 1A is a view showing an example of the exterior and interior of a vehicle;
FIG. 1B is a view showing another example of the interior of the vehicle;
FIG. 2 is a view showing the external appearance of a display apparatus for vehicles according to an embodiment of the present disclosure;
FIG. 3 illustrates an example of an internal block diagram of the display apparatus for vehicles of FIG. 2;
FIG. 4 is a view showing a system executed in a signal processing device according to an embodiment of the present disclosure;
FIG. 5 is a view showing an example of a system executed in a signal processing device according to the present disclosure;
FIG. 6 is a view showing another example of the system executed in the signal processing device according to the present disclosure;
FIG. 7 is a view showing a further example of the system executed in the signal processing device according to the present disclosure;
FIGS. 8 to 9B are views referred to in the description of FIG. 5;
FIG. 10 is a diagram illustrating an example of a system executed in a signal processing device according to an embodiment of the present disclosure;
FIG. 11 is a diagram illustrating an example of a system executed in a signal processing device according to an embodiment of the present disclosure; and
FIGS. 12 to 17 are diagrams referred to in the description of FIG. 11.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" may be used interchangeably.

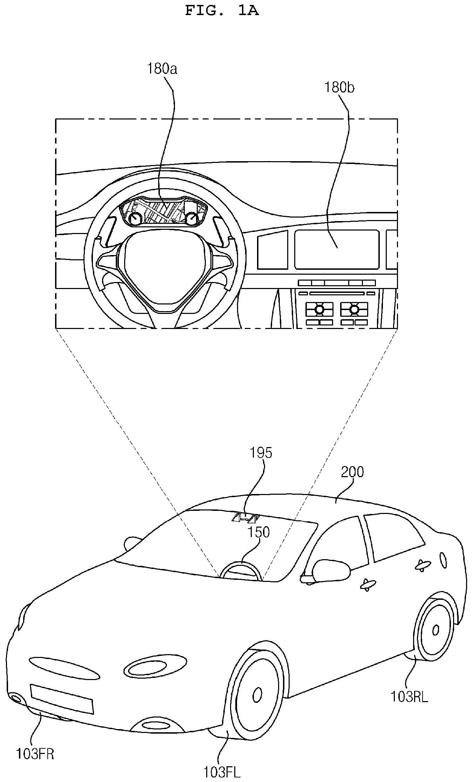

FIG. 1A is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 may be provided with a camera 195 configured to acquire an image of the front of the vehicle.

Meanwhile, the vehicle 200 may be further provided therein with a plurality of displays 180a and 180b configured to display images and information.

In FIG. 1A, a cluster display 180a and an audio video navigation (AVN) display 180b are illustrated as the plurality of displays 180a and 180b. In addition, a head up display (HUD) may also be used.

Meanwhile, the audio video navigation (AVN) display 180b may also be called a center information display.

Meanwhile, the vehicle 200 described in this specification may be a concept including all of a vehicle having an engine as a power source, a hybrid vehicle having an engine and an electric motor as a power source, and an electric vehicle having an electric motor as a power source.

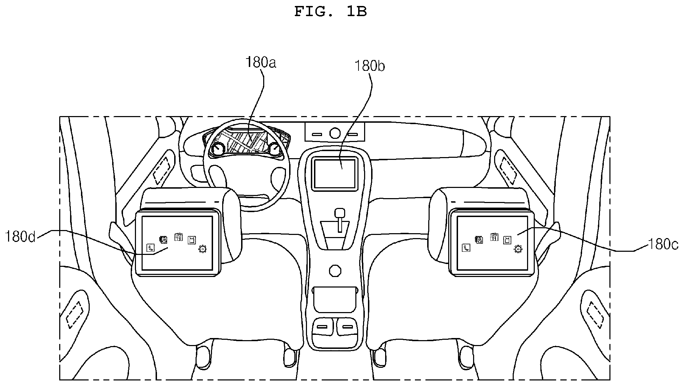

FIG. 1B is a view showing another example of the interior of the vehicle.

Referring to the figure, a cluster display 180a, an audio video navigation (AVN) display 180b, rear seat entertainment displays 180c and 180d, and a rear-view mirror display (not shown) may be located in the vehicle 200.

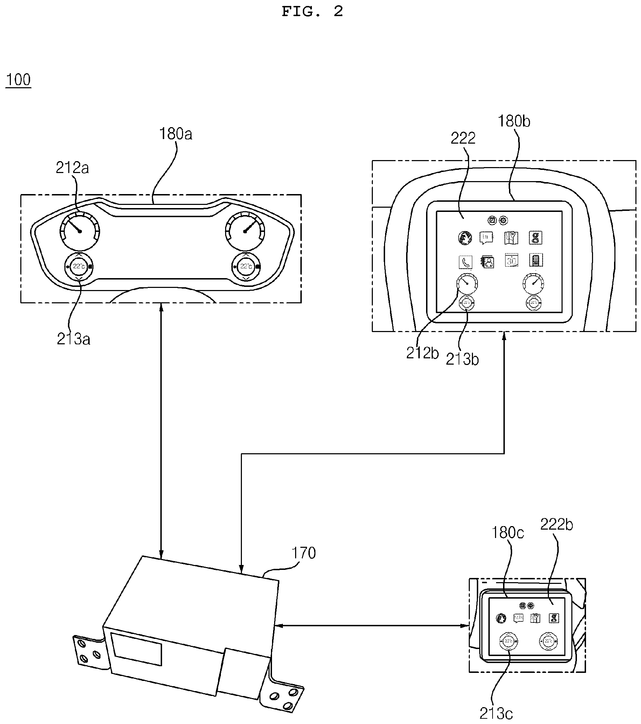

FIG. 2 is a view showing the external appearance of a display apparatus for vehicles according to an embodiment of the present disclosure.

The display apparatus 100 for vehicles according to the embodiment of the present disclosure may include a plurality of displays 180a and 180b and a signal processing device 170 configured to perform signal processing in order to display images and information on the plurality of displays 180a and 180b.

The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

The signal processing device 170 may have a processor 175 provided therein, and first to third virtual machines 520 to 540 may be executed by a hypervisor 505 in the processor 175.

The second virtual machine 530 may be operated for the first display 180a, and the third virtual machine 540 may be operated for the second display 180b.

Meanwhile, the first virtual machine 520 in the processor 175 may perform control such that a shared memory 508 based on the hypervisor 505 is set for transmission of the same data to the second virtual machine 530 and the third virtual machine 540. Consequently, the first display 180a and the second display 180b in the vehicle may display the same information or the same images in a synchronized state.

Meanwhile, the first virtual machine 520 in the processor 175 shares at least some of data with the second virtual machine 530 and the third virtual machine 540 for divided processing of data. Consequently, the plurality of virtual machines for the plurality of displays in the vehicle may divide and process data.

Meanwhile, the first virtual machine 520 in the processor 175 may receive and process wheel speed sensor data of the vehicle, and may transmit the processed wheel speed sensor data to at least one of the second virtual machine 530 or the third virtual machine 540. Consequently, at least one virtual machine may share the wheel speed sensor data of the vehicle.

Meanwhile, the display apparatus 100 for vehicles according to the embodiment of the present disclosure may further include a rear seat entertainment (RSE) display 180c configured to display driving state information, simple navigation information, various kinds of entertainment information, or an image.

The signal processing device 170 may further execute a fourth virtual machine (not shown), in addition to the first to third virtual machines 520 to 540, on the hypervisor 505 in the processor 175 to control the RSE display 180c.

Consequently, it is possible to control various displays 180a to 180c using a single signal processing device 170.

Meanwhile, some of the plurality of displays 180a to 180c may be operated based on a Linux Operating System (OS), and others may be operated based on a Web Operating System (OS).

When touch is input to any one of the displays 180a and 180b or 180a to 180c configured to be operated under various operating systems, the signal processing device 170 according to the embodiment of the present disclosure may perform control such that the touch input is rapidly and accurately processed.

Meanwhile, FIG. 2 illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a home screen 222b including a plurality of applications and an in-vehicle temperature indicator 213c is displayed on the third display 180c.

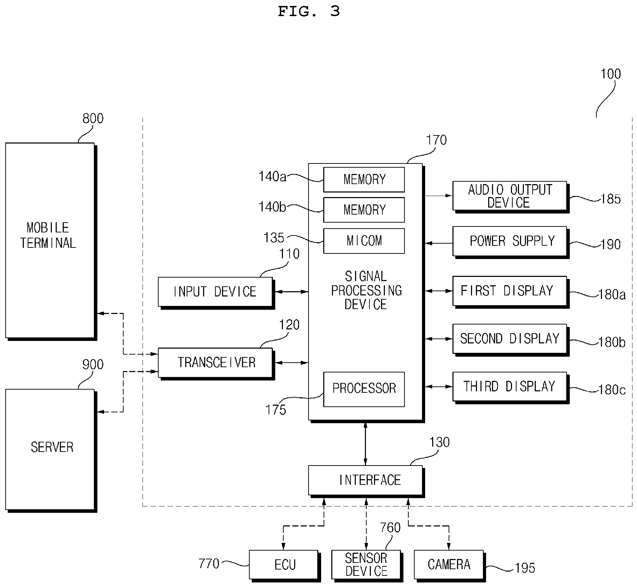

FIG. 3 illustrates an example of an internal block diagram of the display apparatus for vehicles according to the embodiment of the present disclosure.

Referring to the figure, the display apparatus 100 for vehicles according to the embodiment of the present disclosure may include an input device 110, a transceiver 120, an interface 130, a signal processing device 170, a plurality of displays 180a to 180c, an audio output device 185, and a power supply 190.

The input device 110 may include a physical button or pad for button input or touch input.

Meanwhile, the input device 110 may include a touch sensor (not shown) configured to sense touch input to the displays 180a, 180b, and 180c.

Meanwhile, the input device 110 may include a microphone (not shown) for user voice input.

The transceiver 120 may wirelessly exchange data with a mobile terminal 800 or a server 900.

In particular, the transceiver 120 may wirelessly exchange data with a mobile terminal 800 of a vehicle driver. Any of various data communication schemes, such as Bluetooth, Wi-Fi, WIFI Direct, and APIX, may be used as a wireless data communication scheme.

The transceiver 120 may receive weather information and road traffic situation information, such as transport protocol expert group (TPEG) information, from the mobile terminal 800 or the server 900. To this end, the transceiver 120 may include a mobile communication module (not shown).

The interface 130 may receive sensor information from an electronic control unit (ECU) 770 or a sensor device 760, and may transmit the received information to the signal processing device 170.

Here, the sensor information may include at least one of vehicle direction information, vehicle position information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, and in-vehicle humidity information.

The sensor information may be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor. Meanwhile, the position module may include a GPS module configured to receive GPS information.

Meanwhile, the interface 130 may receive front-of-vehicle image data, side-of-vehicle image data, rear-of-vehicle image data, and obstacle-around-vehicle distance information from a camera 195 or lidar (not shown) or radar (not shown), and may transmit the received information to the signal processing device 170.

The audio output device 185 may convert an electrical signal from the signal processing device 170 into an audio signal, and may output the audio signal. To this end, the audio output device 185 may include a speaker.

The power supply 190 may supply power necessary to operate components under control of the signal processing device 170. In particular, the power supply 190 may receive power from a battery in the vehicle.

The signal processing device 170 may control overall operation of each device in the display apparatus 100 for vehicles.

Meanwhile, the signal processing device 170 may be implemented in the form of a system on chip (SOC).

The signal processing device 170 may include the processor 175 configured to perform signal processing for vehicle displays 180a, 180b, and 180c, a first memory 140a and a second memory 140b configured to store various data, and a microcomputer (MICOM) 135.

The first memory 140a, which is a non-volatile memory, may store various data even in a standby mode or when power is turned off.

For example, in response to entry into the standby mode, the first memory 140a may store a file corresponding to a first application running on any one of a plurality of virtual machines 510 to 550.

In another example, the first memory 140a may store operating systems (OS).

Meanwhile, the first memory 140a may store various data for the overall operation of the vehicle display apparatus 100, the data including programs for processing or controlling the signal processing device 170, and the like.

Meanwhile, the second memory 140b is a volatile memory, and various data therein are erased in the standby mode or when power is turned off, and the second memory 140b may temporarily store data in an active mode.

For example, in response to a transition from the standby mode to the active mode, the second memory 140b may load the files stored in the first memory 140a.

In another example, in response to a transition from the standby mode to the active mode, the second memory 140b may load the operating systems (OS) stored in the first memory 140a.

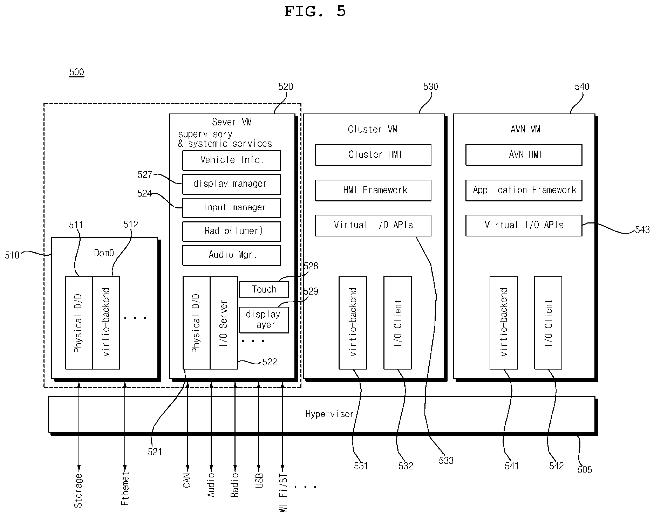

Meanwhile, the processor 175 may execute the hypervisor 505 (see FIG. 5).

The processor 175 may execute the first to third virtual machines 520 to 540 on the hypervisor 505 (see FIG. 5) in the processor 175.

Meanwhile, the processor 175 may further execute a legacy virtual machine configured to receive and process Ethernet data. For example, as shown in FIG. 5, the legacy virtual machine 510 may be executed by the first virtual machine 520 in the processor 175.

Among the first to third virtual machines 520 to 540 (see FIG. 5), the first virtual machine 520 may be called a server virtual machine, and the second and third virtual machines 530 and 540 may be called guest virtual machines.

In this case, the second virtual machine 530 may be operated for the first display 180a, and the third virtual machine 540 may be operated for the second display 180b.

For example, the first virtual machine 520 in the processor 175 may receive, process, and output vehicle sensor data, position information data, camera image data, audio data, or touch input data. Data processed only by a legacy virtual machine and data processed by the first virtual machine 520 may be distinguished from each other, whereby data processing may be efficiently performed. In particular, the first virtual machine 520 may process most of the data, whereby 1:N data sharing may be achieved.

As another example, the first virtual machine 520 may directly receive and process CAN communication data, audio data, radio data, USB data, and wireless communication data for the second and third virtual machines 530 and 540.

The first virtual machine 520 may transmit the processed data to the second and third virtual machines 530 and 540.

Consequently, only the first virtual machine 520, among the first to third virtual machines 520 to 540, may receive communication data and external input data, and may perform signal processing, whereby load in signal processing by the other virtual machines may be reduced and 1:N data communication may be achieved, and therefore synchronization at the time of data sharing may be achieved.

Meanwhile, the first virtual machine 520 writes some of data in a first shared memory (not shown) so as to be transmitted to the second virtual machine 530, and writes some other of data in the first shared memory (not shown) so as to be transmitted to the third virtual machine 540. The second virtual machine 530 and the third virtual machine 540 may be configured to process the received data, and write the processed data in a second shared memory (not shown).

At this time, data may be any one of image data, audio data, navigation data, and voice recognition data.

Meanwhile, the first virtual machine 520 may process some other of data, and may be configured to write the processed data in the second shared memory (not shown). That is, the first virtual machine 520 may perform data processing in addition to the second virtual machine 530 and the third virtual machine 540.

Meanwhile, in response to a fourth virtual machine 550 configured to be operated for the third display 180c being executed in the processor 175, the first virtual machine 520 may write some other of data in the first shared memory (not shown), and the fourth virtual machine 550 may process the received data and may be configured to write the processed data in the second shared memory (not shown).

Meanwhile, the first virtual machine 520 may generate command queues for distributed processing of data in the second virtual machine 530 and the third virtual machine 540. Consequently, the plurality of virtual machines may divide and process data.

Meanwhile, in response to the second virtual machine 530 and the third virtual machine 540 sharing the same data, the first virtual machine 520 in the processor 175 may generate one command queue. Consequently, the same data may be synchronized and shared.

Meanwhile, the first virtual machine 520 may generate command queues corresponding to the number of virtual machines for distributed processing of data.

Meanwhile, the first virtual machine 520 may be configured to transmit at least some of data to at least one of the second virtual machine 530 or the third virtual machine 540 for distributed processing of data.

For example, the first virtual machine 520 may allocate the first shared memory (not shown) for transmitting at least some of data to at least one of the second virtual machine 530 or the third virtual machine 540, and image data processed by the second virtual machine 530 or the third virtual machine 540 may be written in the second shared memory (not shown).

Meanwhile, the first virtual machine 520 may be configured to write data in the shared memory 508, whereby the second virtual machine 530 and the third virtual machine 540 share the same data.

For example, the first virtual machine 520 may be configured to write radio data or wireless communication data in the shared memory 508, whereby the second virtual machine 530 and the third virtual machine 540 share the same data. Consequently, 1:N data sharing may be achieved.

Eventually, the first virtual machine 520 may process most of the data, whereby 1:N data sharing may be achieved.

Meanwhile, the first virtual machine 520 in the processor 175 may be configured to set the shared memory 508 based on the hypervisor 505 in order to transmit the same data to the second virtual machine 530 and the third virtual machine 540.

That is, the first virtual machine 520 in the processor 175 may transmit the same data to the second virtual machine 530 and the third virtual machine 540 in a synchronized state using the shared memory 508 based on the hypervisor 505. Consequently, the plurality of displays 180a and 180b in the vehicle may display the same images in a synchronized state.

Meanwhile, the signal processing device 170 may process various signals, such as an audio signal, an image signal, and a data signal. To this end, the signal processing device 170 may be implemented in the form of a system on chip (SOC).

Meanwhile, the shared memory 508 may be implemented in the first memory 140a.

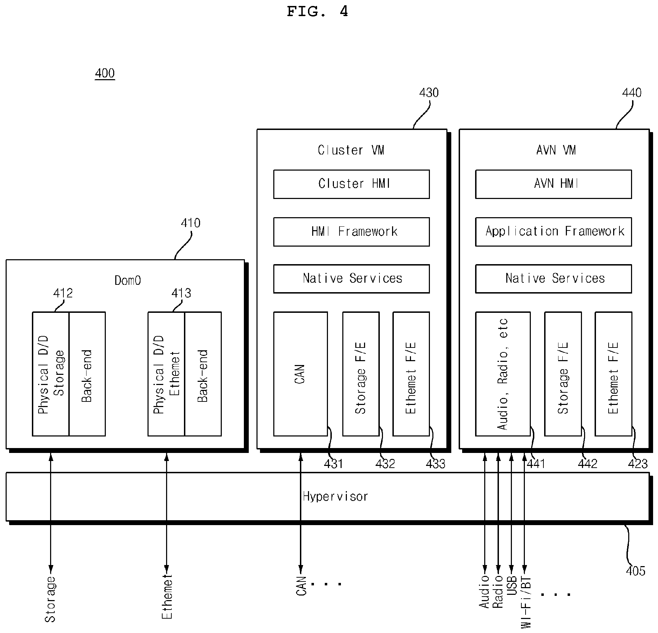

FIG. 4 is a view showing a system executed in a signal processing device according to an embodiment of the present disclosure.

Referring to the figure, FIG. 4 is a view illustrating that virtual machines are used for the cluster display 180a and the AVN display 180b.

The system 400 executed in the signal processing device of FIG. 4 illustrates that a cluster virtual machine 430 and an AVN virtual machine 440 are executed through a hypervisor 405 in the processor 175.

Meanwhile, the system 400 executed in the signal processing device of FIG. 4 illustrates that a legacy virtual machine 410 is also executed on the hypervisor 405 in the processor 175.

The legacy virtual machine 410 may include an interface 412 for data communication with the memory 140 and an interface 413 for Ethernet communication.

Meanwhile, the cluster virtual machine 430 may include an interface 431 for CAN communication, an interface 432 for communication with the interface 412 of the legacy virtual machine 410, and an interface 433 for communication with the interface 413 of the legacy virtual machine 410.

Meanwhile, the AVN virtual machine 440 may include an interface 441 for input and output of audio data, radio data, USB data, and wireless communication data, an interface 442 for communication with the interface 412 of the legacy virtual machine 410, and an interface 443 for communication with the interface 413 of the legacy virtual machine 410.

In the system 400, there is a disadvantage in that CAN communication data are input and output only in the cluster virtual machine 430, whereby the CAN communication data cannot be utilized in the AVN virtual machine 440.

Also, in the system 400 of FIG. 4, there is a disadvantage in that audio data, radio data, USB data, and wireless communication data are input and output only in the AVN virtual machine 440, whereby these data cannot be utilized in the cluster virtual machine 430.

Meanwhile, there is a disadvantage in that the cluster virtual machine 430 and the AVN virtual machine 440 must include the interfaces 431 and 432 and the interfaces 441 and 442, respectively, for memory data and Ethernet communication data input and output in the legacy virtual machine 410.

Therefore, the present disclosure proposes a scheme for improving the system of FIG. 4. That is, unlike FIG. 4, virtual machines are classified into a server virtual machine and guest virtual machines for inputting and outputting various memory data and communication data not in the guest virtual machines but in the server virtual machine. This will be described with reference to FIG. 5 and subsequent figures.

FIG. 5 is a view showing an example of a system executed in a signal processing device according to the present disclosure.

Referring to the figure, the system 500 of FIG. 5 illustrates that the first virtual machine 520, which is a server virtual machine, the second virtual machine 530, which is a guest virtual machine, and the third virtual machine 540, which is a guest virtual machine, are executed on the hypervisor 505 in the processor 175 of the signal processing device 170.

The second virtual machine 530 may be a virtual machine for the cluster display 180a, and the third virtual machine 540 may be a virtual machine for the AVN display 180b.

That is, the second virtual machine 530 and the third virtual machine 540 may be operated for image rendering of the cluster display 180a and the AVN display 180b, respectively.

Meanwhile, the system 50 executed in the signal processing device 170 of FIG. 5 illustrates that a legacy virtual machine 510 is also executed on the hypervisor 505 in the processor 175.

The legacy virtual machine 510 may include an interface 511 for data communication with the memory 140 and Ethernet communication.

The figure illustrates that the interface 511 is a physical device driver; however, various modifications are possible.

Meanwhile, the legacy virtual machine 510 may further include a virtio-backend interface 512 for data communication with the second and third virtual machines 530 and 540.

The first virtual machine 520 may include an interface 521 for input and output of audio data, radio data, USB data, and wireless communication data and an input and output server interface 522 for data communication with the guest virtual machines.

That is, the first virtual machine 520, which is a server virtual machine, may provide inputs/outputs (I/O) difficult to virtualize with standard virtualization technology (VirtIO) to a plurality of guest virtual machines, such as the second and third virtual machines 530 and 540.

Meanwhile, the first virtual machine 520, which is a server virtual machine, may control radio data and audio data at a supervisor level, and may provide the data to a plurality of guest virtual machines, such as the second and third virtual machines 530 and 540.

Meanwhile, the first virtual machine 520, which is a server virtual machine, may process vehicle data, sensor data, and surroundings-of-vehicle information, and may provide the processed data or information to a plurality of guest virtual machines, such as the second and third virtual machines 530 and 540.

Meanwhile, the first virtual machine 520 may provide supervisory services, such as processing of vehicle data and audio routing management.

Next, the second virtual machine 530 may include an input and output client interface 532 for data communication with the first virtual machine 520 and APIs 533 configured to control the input and output client interface 532.

In addition, the second virtual machine 530 may include a virtio-backend interface for data communication with the legacy virtual machine 510.

The second virtual machine 530 may receive memory data by communication with the memory 140 or Ethernet data by Ethernet communication from the virtio-backend interface 512 of the legacy virtual machine 510 through the virtio-backend interface.

Next, the third virtual machine 540 may include an input and output client interface 542 for data communication with the first virtual machine 520 and APIs 543 configured to control the input and output client interface 542.

In addition, the third virtual machine 540 may include a virtio-backend interface for data communication with the legacy virtual machine 510.

The third virtual machine 540 may receive memory data by communication with the memory 140 or Ethernet data by Ethernet communication from the virtio-backend interface 512 of the legacy virtual machine 510 through the virtio-backend interface.

Meanwhile, the legacy virtual machine 510 may be provided in the first virtual machine 520, unlike FIG. 5.

In the system 500, CAN communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, audio data, radio data, USB data, and wireless communication data are input and output only in the first virtual machine 520, but may be provided to a plurality of guest virtual machines, such as the second and third virtual machines 530 and 540, through data processing in the first virtual machine 520. Consequently, 1:N data communication by processing of the first virtual machine 520 may be achieved.

Also, in the system 500 of FIG. 5, touch input to the first display 180a or the second display 180b is input only to the first virtual machine 520 and is not input to the second virtual machine 530 and the third virtual machine 540. Information regarding the touch input is transmitted to the second virtual machine 530 or the third virtual machine 540.

Consequently, the touch input may be rapidly and accurately processed. In addition, the touch input may be rapidly and accurately processed even though the number of virtual machines that are executed is increased.

Meanwhile, in the system 500 of FIG. 5, the second and third virtual machines 530 and 540 may be operated based on different operating systems.

For example, the second virtual machine 530 may be operated based on a Linux OS, and the third virtual machine 540 may be operated based on a Web OS.

In the first virtual machine 520, the shared memory 508 based on the hypervisor 505 is set for data sharing, even though the second and third virtual machines 530 and 540 are operated based on different operating systems. Even though the second and third virtual machines 530 and 540 are operated based on different operating systems, therefore, the same data or the same images may be shared in a synchronized state. Eventually, the plurality of displays 180a and 180b may display the same data or the same images in a synchronized state.

Meanwhile, the first virtual machine 520 transmits information regarding the touch input to the second virtual machine 530 or the third virtual machine 540 even though the second and third virtual machines 530 and 540 are operated based on different operating systems. Consequently, the touch input may be rapidly and accurately processed even though the second and third virtual machines 530 and 540 are operated based on different operating systems (OS).

Meanwhile, the first virtual machine 520 may include a display manager 527 configured to control overlays displayed on the first display 180a and the second display 180b through the second and third virtual machines 530 and 540, and a display layer server 529.

The display layer server 529 may receive a first overlay provided by the second virtual machine 530 and a second overlay provided by the third virtual machine 540.

Meanwhile, the display layer server 529 may transmit a virtual overlay, which is different from the first overlay or the second overlay, to at least one of the second virtual machine 530 or the third virtual machine 540.

Meanwhile, the display manager 527 in the first virtual machine 520 may receive the first overlay provided by the second virtual machine 530 and the second overlay provided by the third virtual machine 540 through the display layer server 529.

The display manager 527 in the first virtual machine 520 may be configured to transmit the virtual overlay, which is different from the first overlay or the second overlay, to at least one of the second virtual machine 530 or the third virtual machine 540 through the display layer server 529.

In response thereto, the second virtual machine 530 may perform control such that the first overlay and the virtual overlay are combined and displayed on the first display 180a.

In addition, the third virtual machine 540 may perform control such that the second overlay and the virtual overlay are combined and displayed on the second display 180b.

Meanwhile, the first virtual machine 520 may include an input manager 524 configured to receive an input signal from the outside. At this time, the input signal may be an input signal from a predetermined button (start button) in the vehicle, a touch input signal, or a voice input signal.

For example, the input manager 524 in the first virtual machine 520 may receive touch input from the first display 180a or the second display 180b.

Meanwhile, the first virtual machine 520 may include a touch server 528 configured to transmit information regarding the touch input related to the touch input from the first display 180a or the second display 180b to the second virtual machine 530 or the third virtual machine 540.

For example, in response to touch input corresponding to the first display 180a, the touch server 528 in the first virtual machine 520 may transmit information regarding the touch input to the second virtual machine 530.

Meanwhile, the touch server 528 in the first virtual machine 520 may receive the touch input from the first display 180a or the second display 180b.

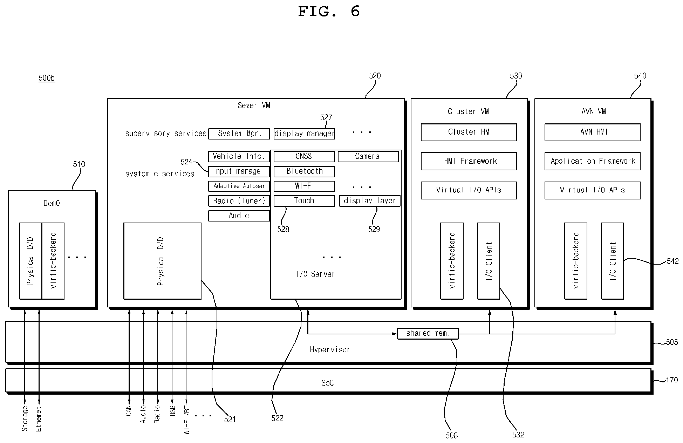

FIG. 6 is a view showing another example of the system executed in the signal processing device according to the present disclosure.

Referring to the figure, in the system 500b executed by the processor 175 in the signal processing device 170, the processor 175 in the signal processing device 170 executes the first to third virtual machines 520 to 540 on the hypervisor 505 in the processor 175, and the first virtual machine 520 in the processor 175 is configured to set he shared memory 508 based on the hypervisor 505 for transmission of data to the second and third virtual machines 530 and 540.

For example, information regarding touch input may be illustrated as the data. Consequently, the information regarding touch input may be transmitted to the second virtual machine 530 or the third virtual machine 540. Eventually, the touch input to the first display 180a or the second display 180b may be rapidly and accurately processed. In addition, the touch input may be rapidly and accurately processed even though the number of virtual machines that are executed is increased.

As another example, image data may be illustrated as the data. Consequently, an image may be displayed on the first display 180a or the second display 180b.

Meanwhile, in response to the same image data being shared in the shared memory 508, the plurality of displays 180a and 180b in the vehicle may display the same data in a synchronized state.

As another example, CAN communication data, audio data, radio data, USB data, wireless communication data, or position information data may be illustrated as the data. Consequently, information regarding the data may be displayed on the first display 180a or the second display 180b.

Meanwhile, although not shown in FIG. 6, the legacy virtual machine 510 may transmit memory data from the memory 140 or Ethernet data by Ethernet communication to the second and third virtual machines 530 and 540 using the shared memory 508 based on the hypervisor 505. Consequently, information corresponding to the memory data or the Ethernet data may be displayed on the first display 180a or the second display 180b.

Meanwhile, the first virtual machine 520 in the system 500b of FIG. 6 may include a display manager 527, a display layer server 529, an input manager 524, and a touch server 528, similarly to the first virtual machine 520 in the system 500 of FIG. 5.

Meanwhile, the input and output server interface 522 in the first virtual machine 520 in the system 500b of FIG. 6 may include a display layer server 529 and a touch server 528, unlike FIG. 5.

The display manager 527, the display layer server 529, the input manager 524, and the touch server 528 operate in the same manner as in FIG. 5, such that a description thereof will be omitted.

Meanwhile, the first virtual machine 520 of FIG. 6 may further include a system manager for overall system control, a vehicle information manager for vehicle information management, an audio manager for audio control, and a radio manager for radio control.

Meanwhile, the input and output server interface 522 in the first virtual machine 520 in the system 500b of FIG. 6 may further include a GNSS server for GPS information input and output, a Bluetooth server for Bluetooth input and output, a Wi-Fi server for Wi-Fi input and output, and a camera server for camera data input and output.

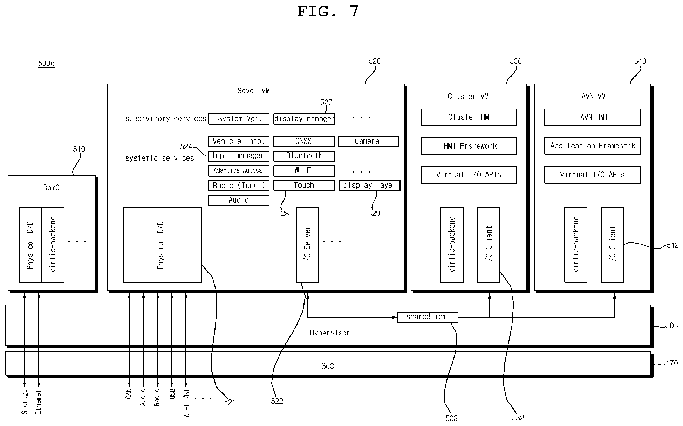

FIG. 7 is a view showing a further example of the system executed in the signal processing device according to the present disclosure.

Referring to the figure, the system 500c executed by the processor 175 in the signal processing device of FIG. 7 is similar to the system 500b of FIG. 6.

That is, like FIG. 6, the processor 175 of FIG. 7 executes the first to third virtual machines 520 to 540 on the hypervisor 505 in the processor 175.

In FIG. 7, however, the display layer server 529 and the touch server 528 may be provided and executed in the first virtual machine 520 outside the input and output server interface 522, unlike FIG. 6.

In addition, the GNSS server for GPS information input and output, the Bluetooth server for Bluetooth input and output, the Wi-Fi server for Wi-Fi input and output, and the camera server for camera data input and output may be provided and executed in the first virtual machine 520 outside the input and output server interface 522, unlike FIG. 6.

That is, the display manager 527, the display layer server 529, the input manager 524, and the touch server 528 may be provided and executed in the first virtual machine 520.

Meanwhile, unlike FIG. 5, the input and output server interface 522 of the first virtual machine 520 in the system 500b of FIG. 6 may include the display layer server 529 and the touch server 528.

The display manager 527, the display layer server 529, the input manager 524, and the touch server 528 operate in the same manner as in FIG. 5, such that a description thereof will be omitted.

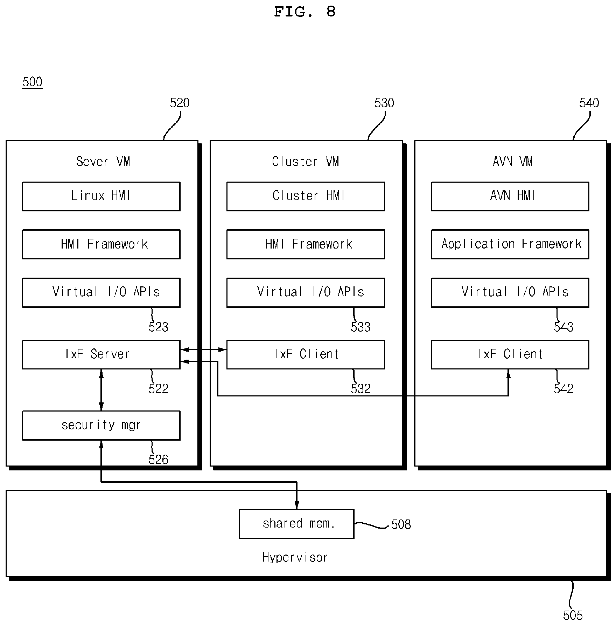

FIGS. 8 to 9B are views referred to in the description of FIG. 5.

First, FIG. 8 illustrates that the first to third virtual machines 520 to 540 are executed on the hypervisor 505 in the processor 175 of the system 500 according to the present disclosure and that the first virtual machine 520 in the processor 175 is configured to set he shared memory 508 based on the hypervisor 505 in order to transmit the same data to the second virtual machine 530 and the third virtual machine 540.

Consequently, the plurality of displays 180a and 180b in the vehicle may display the same images in a synchronized state.

Meanwhile, high-speed data communication may be performed between the plurality of virtual machines. Furthermore, high-speed data communication may be performed even though the plurality of virtual machines is executed by different operating systems.

Meanwhile, the first virtual machine 520 in the processor 175 may not allocate memories corresponding in number to the virtual machines but may use a single shared memory 508, not memory allocation in response to transmitting the data processed by the first virtual machine 520 to another virtual machine. Consequently, 1:N data communication using the shared memory 508, not 1:1 data communication, may be performed between the virtual machines.

Meanwhile, the first virtual machine 520 in the processor 175 may include an input and output server interface 522 and a security manager 526.

Meanwhile, the second virtual machine 530 and the third virtual machine 540 may include input and output client interfaces 532 and 542, respectively. Consequently, high-speed data communication between the plurality of virtual machines may be performed using the input and output server interface 522 and the input and output client interfaces 532 and 542.

The input and output server interface 522 in the first virtual machine 520 may receive requests for transmission of the same data from the input and output client interfaces 532 and 542 in the second virtual machine 530 and the third virtual machine 540, and may transmit shared data to the shared memory 508 through the security manager 526 based thereon.

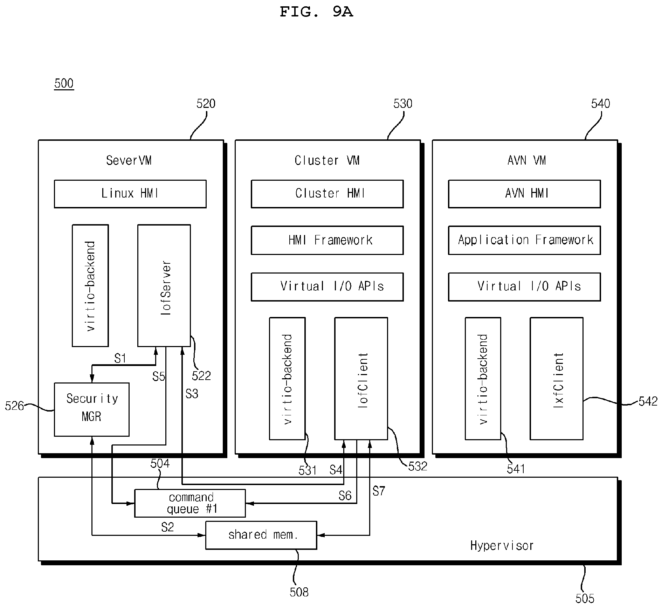

FIG. 9A is a view illustrating transmission of shared data in more detail.

Referring to the figure, in order to transmit shared data, the input and output server interface 522 in the first virtual machine 520 transmits a request for allocation of the shared memory 508 to the security manager 526 (S1).

Subsequently, the security manager 526 may allocate the shared memory 508 using the hypervisor 505 (S2), and may write shared data in the shared memory 508.

Meanwhile, the input and output client interfaces 532 and 542 may transmit a request for connection to the input and output server interface 522 after allocation of the shared memory 508 (S3).

Meanwhile, the input and output server interface 522 transmits information regarding shared memory 508 including key data to the input and output client interfaces 532 and 542 after allocation of the shared memory 508 (S4). At this time, the key data may be private key data for data access.

Meanwhile, the first virtual machine 520 in the processor 175 may transmit information regarding the shared memory 508 to the second virtual machine 530 and the third virtual machine 540 after setting of the shared memory 508.

Subsequently, the input and output server interface 522 in the first virtual machine 520 is configured to generate a command or a command queue for event processing, other than data, to control distributed processing between the virtual machines (S5).

The figure illustrates that a command queue is generated in a command queue buffer 504 in the hypervisor 505 under control of the input and output server interface 522. However, the present disclosure is not limited thereto, and the command queue may be generated in the first virtual machine 520, not the hypervisor 505, under control of the input and output server interface 522.

Subsequently, the input and output client interfaces 532 and 542 access the command queue buffer 504 to receive the generated command queue or information regarding the command queue (S6).

For example, in response to the commands transmitted to the input and output client interfaces 532 and 542 being the same, the generated command queues may be the same.

As another example, in response to the commands transmitted to the input and output client interfaces 532 and 542 being different from each other, different command queues may be transmitted to the input and output client interfaces 532 and 542.

Subsequently, the input and output client interfaces 532 and 542 may access the shared memory 508 based on the received key data (S5), and may copy or read the shared data from the shared memory 508 (S7).

Particularly, in response to the input and output client interfaces 532 and 542 receiving the same shared data, the input and output client interfaces 532 and 542 may access the shared memory 508 based on the same command queues and the same key data (S5), and may copy or read the shared data from the shared memory 508.

Consequently, the second virtual machine 530 and the third virtual machine 540 may access the shared memory 508, and may eventually share the shared data.

For example, in the case in which the shared data are image data, the second virtual machine 530 and the third virtual machine 540 may share the image data, and eventually the plurality of displays 180a and 180b in the vehicle may display the same shared images in a synchronized state.

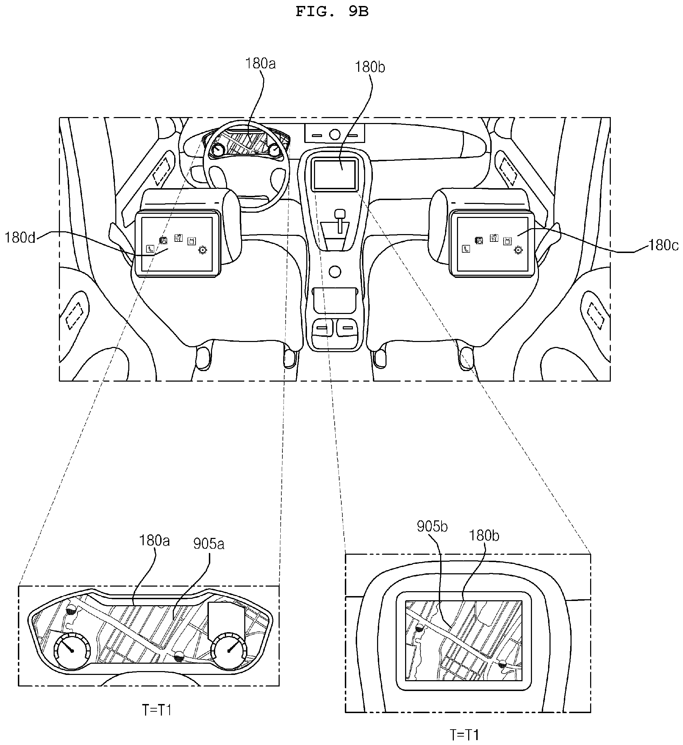

FIG. 9B illustrates that, by the system 500 of FIG. 9A, the second virtual machine 530 displays image data received through the shared memory 508 on the first display 180a, and the third virtual machine 540 displays image data received through the shared memory 508 on the second display 180b.

FIG. 9B illustrates that an image 905a displayed on the first display 180a and an image 905b displayed on the second display 180b are synchronized, whereby the same images 905a and 905b are displayed at the time of T1.

That is, image data processed by the first virtual machine 520 in the processor 175 are transmitted to the second virtual machine 530 and the third virtual machine 540 through the shared memory 508, and the first image 905a displayed on the first display 180a and the second image 905b displayed on the second display 180b based on the image data may be the same. Consequently, the plurality of displays 180a and 180b in the vehicle may display the same images in a synchronized state.

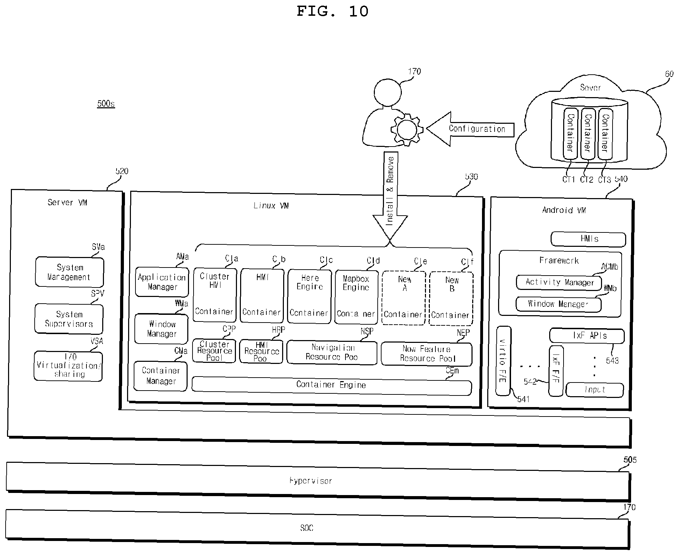

FIG. 10 is a diagram illustrating an example of a system executed in a signal processing device according to an embodiment of the present disclosure.

Referring to the drawing, a system 500s executed in the signal processing device 170 may execute or execute first to third virtual machines 520, 530, and 540.

Particularly, the system 500s executed in the signal processing device 170 may execute the first to third virtual machines 520, 530, and 540 on the hypervisor 505 in the processor 175.

The first virtual machine 520, which is a server virtual machine, may execute system management SMa for overall system control, system supervisors SPV for overall system management, and input/output (I/O) virtualization VSA.

Meanwhile, the I/O virtualization VSA may correspond to the input and output server interface 522 of FIG. 5 and the like.

The second virtual machine 530, which is a guest virtual machine, may operate on the Linux Operating System (OS), and may execute an internal shared container and at least one service container for application execution.

In the drawing, an example of executing a plurality of service containers is illustrated, and more specifically, it is illustrated that the second virtual machine 530 includes a cluster HMI cluster CTa, an HMI cluster CTb, a Here Engine cluster CTc related to a digital map, a map box engine cluster CTd, a first new cluster CTe, and a second new cluster CTf.

The cluster HMI cluster CTa may execute on a cluster resource pool CPP, the HMI cluster CTb may execute on an HMI resource pool HRP, the Here Engine cluster CTc and the map box engine cluster CTd may execute on a navigation resource pool NSP, and the first new cluster CTe and the second new cluster CTf may execute on a new feature resource pool NEP.

Meanwhile, the second virtual machine 530, which is a guest virtual machine, may execute a container engine CEm, and may execute at least one service container CTa to CTf on the container engine CEm.

Particularly, the second virtual machine 530, which is a guest virtual machine, may execute the container engine CEm, may execute at least one resource pool CPP, HRP, NSP, and NEP on the container engine CEm, and may execute at least one service container CTa to CTf on at least one resource pool CPP, HRP, NSP, and NEP.

Meanwhile, the second virtual machine 530, which is a guest virtual machine, may execute the container engine CEm or a container manager CMa for managing the at least one service container CTa to CTf,

Meanwhile, the second virtual machine 530, which is a guest virtual machine, may execute a window manager WMa for window management.

Meanwhile, the second virtual machine 530, which is a guest virtual machine, may execute an application manager Ama for application management.

Meanwhile, unlike the second virtual machine 530, the third virtual machine 540 which is a guest virtual machine may operate on the Android operating system, and in order to execute applications, the third virtual machine 540 may execute a physical device driver 541, the input and output client interface 542, APIs 543 for controlling the input and output client interface 542, framework including an activity manager ACMb and a window manager WMb, HMI, and the like.

Meanwhile, at least one container in the second virtual machine 530 may be any one which is selected from among a plurality of containers CT1 to CT3 in the server 60, to be installed and executed.

During deployment, installation, and execution of the containers, the deployment, installation, and execution of each of the containers result in significant data consumption and resource consumption. Particularly, as the number of containers installed increases, the data consumption and resource consumption increase significantly.

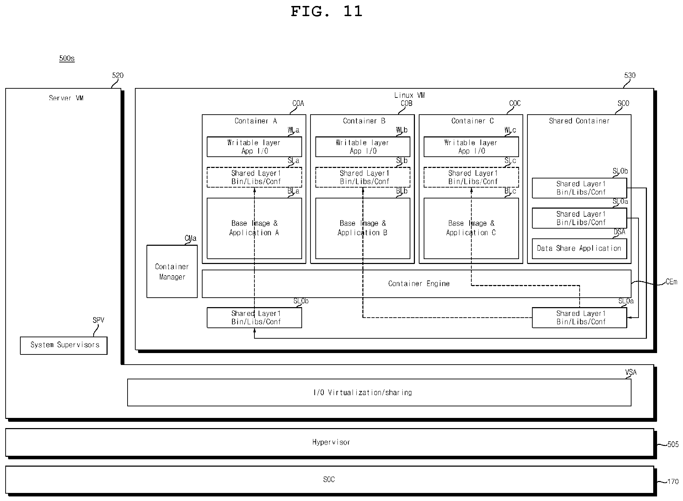

Accordingly, the present disclosure proposes a method of efficiently installing and executing the containers, which will be described below with reference to FIG. 11 and the following figures.

FIG. 11 is a diagram illustrating an example of a system executed in a signal processing device according to another embodiment of the present disclosure.

Referring to the drawing, the processor 175 of the system 500s executed in the signal processing device 170 may execute or execute the first and second virtual machines 520 and 530.

The first virtual machine 520, which is a server virtual machine, may execute the I/O virtualization VSA and the system supervisors SPV for overall system management. Meanwhile, the I/O virtualization VSA may correspond to the input and output server interface 522 of FIG. 5 and the like.

The second virtual machine 530, which is a guest virtual machine, may operate on the Linux Operating System (OS), and may execute a container COA for application execution.

Meanwhile, at least one of the first and second virtual machines 520 and 530 runs the container engine CEm and runs a shared container SCO and at least one service container COA to COC on the container engine CEm.

In the drawing, an example is illustrated in which a plurality of service containers COA to COC and the shared container SCO are executed in the second virtual machine 530.

Meanwhile, the second virtual machine 530, which is a guest virtual machine, may further execute the container manager CMa for managing the container COA.

In this case, the plurality of service containers COA to COC in the second virtual machine 530 may be selected respectively from the plurality of containers CT1 to CT3 in the server 60 of FIG. 10, to be installed and executed.

Meanwhile, according to an embodiment of the present disclosure, a shared layer SLOa in the shared container SCO is used for efficient installation and execution of the plurality of service containers COA to COC.

For example, each of the containers CT1 to CT3 may include base image layers BLa, BLb, and BLc and writable layers WLa, WLb, and WLc on the base image layers BLa, BLb, and BLc, and the shared container SCO may include a data share application DSA and at least one shared layer SLOa and SLOb on the data share application DSA.

Meanwhile, in the plurality of service containers COA to COC according to an embodiment of the present disclosure, before at least one service container COA to COC is executed, the shared layer SLOa in the shared container SCO is added to the at least one service container COA to COC, and the at least one service container COA to COC is executed after the shared layer SLOa is added thereto, and the shared container SCO retrieves the shared layer SLOa after the execution of the at least one service container COA to COC is terminated.

Accordingly, the plurality of service containers COA to COC are not required to continuously store data included in the shared layer SLOa, thereby reducing a storage space required for installing the service containers, and the data included in the shared layer SLOa may be used temporarily even during execution of the service containers, thereby allowing efficient resource management. Accordingly, service container-based application may be executed efficiently. Particularly, applications may be executed efficiently by using the shared container SCO. In addition, a storage space required for installing the service containers may be minimized.

For example, while including a base image layer BLa and a writable layer WLa, a first service container COA receives a first shared layer SLOb from the shared container SCO before the first service container COA is executed.

Accordingly, the first service container COA may temporarily include the base image layer BLa, the first shared layer SLOb on the base image layer BLa, and the writable layer WLa on the first shared layer SLOb.

Further, the first service container COa executes the base image layer BLa, the first shared layer SLOb, and the writable layer WLa. Accordingly, the first service container COA allows smooth and efficient execution of applications.

Meanwhile, after the end of execution of the first service container COA, the shared container SCO retrieves the first shared layer SLOb from the first service container COA. Accordingly, applications may be executed efficiently by using the shared container SOC. In addition, a storage space required for installing the service containers may be minimized.

In another example, while including a base image layer BLb and a writable layer WLb, a second service container COB receives a second shared layer SLOa from the shared container SCO before the second service container COB is executed, and executes the second shared layer SLOa on the base image layer BLb and the writable layer WLb on the second shared layer SLOa. Accordingly, the second service container COB allows smooth and efficient execution of applications.

Meanwhile, after the end of execution of the second service container COB, the shared container SCO retrieves the second shared layer SLOa from the second service container COB. Accordingly, applications may be executed efficiently by using the shared container SOC. In addition, a storage space required for installing the service containers may be minimized.

In yet another example, while including a base image layer BLc and a writable layer WLc, a third service container COC receives the second shared layer SLOa from the shared container SCO before the third service container COC is executed, and executes the second shared layer SLOa on the base image layer BLc and the writable layer WLc on the second shared layer SLOa. Accordingly, the third service container COC allows smooth and efficient execution of applications.

Meanwhile, after the end of execution of the third service container COC, the shared container SCO retrieves the second shared layer SLOa from the second service container COB. Accordingly, applications may be executed efficiently by using the shared container SOC. In addition, a storage space required for installing the service containers may be minimized.

Meanwhile, if the first service container COA and the second service container COB are executed among the at least one service container COA to COC, the processor 175 or the signal processing device 170 according to an embodiment of the present disclosure may add the first shared layer SLOb and the second shared layer SLOa in the shared container SCO to the first service container COA and the second service container COB, respectively, may execute the first service container COA and the second container COB after adding the first and second shared layers to the first service container COA and the second service container COB, and may retrieve each of the first shared layer SLOb and the second shared layer SLOa after terminating the execution of the first service container COA and the second service container COB. Accordingly, applications may be executed efficiently by using the shared container SCO.

Meanwhile, if the second service container COB and the third service container COC are executed among the at least one service container COA to COC, the processor 175 or the signal processing device 170 according to an embodiment of the present disclosure may add a common shared layer SLOa in the shared container SCO to each of the second service container COB and the third service container COC, may execute the second service container COB and the third service container COC after adding the common shared layer SLOa, and may retrieve the common shared layer SLOa after terminating the execution of the second service container COB and the third service container COC. Accordingly, applications may be executed efficiently by using the shared container SCO.

Meanwhile, the shared container SCO may provide the shared layer SLOa, including Augmented Reality (AR) data, Virtual Reality (VR) data, or Mixed Reality (MR) data, to at least one service container COA to COC. Accordingly, applications may be executed efficiently by using the shared container SCO.

Meanwhile, the shared layer SLOa in the shared container SCO may include binary, library, and configuration files that are required for applications. Accordingly, applications may be executed efficiently by using the shared container SCO.

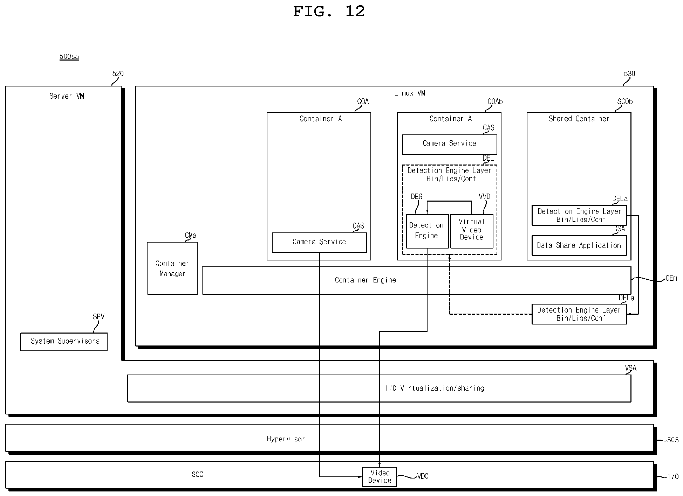

FIGS. 12 to 17 are diagrams referred to in the description of FIG. 11.

First, FIG. 12 is a diagram illustrating an example of installing and running a camera service container.

Referring to the drawing, a system 500sa of FIG. 12 is similar to the system 500s of FIG. 11, but is different in that a camera service container COA is executed among the at least one service container COA to COC.

The processor 175 in the system 500sa executes the first and second virtual machines 520 and 530, and the second virtual machine 530 executes the camera service container COA and the shared container SCO.

Meanwhile, if there is no detection engine layer DEL in the camera service container COA, the second virtual machine 520 may directly access a video device VDC.

That is, if there no detection engine layer DEL in the camera service container COA, the camera service container COA may directly access the video device VDC to transmit or receive data.

In the drawing, an example is illustrated in which only a camera service CAS is included in the camera service container COA, with no detection engine layer DEL included therein. In this case, the camera service CAS may directly access the video device VDC to transmit or receive data.

In this case, the video device VDC may be a hardware device or a driving driver for driving a hardware device.

Meanwhile, if there is the detection engine layer DEL in the camera service container COAb, the camera service container COA may access the video device VDC by using a detection engine in the detection engine layer DEL. Accordingly, service container-based application may be executed efficiently.

In the drawing, an example is illustrated in which the camera service CAS and the detection layer DEL are included in the camera service container COAb.

Meanwhile, the detection engine layer DEL in the camera service container COAb may include a virtual video device WD and a detection engine DEG.

In this case, the detection engine DEG may be created based on data from the data share application DSA in the shared container SCOb and data from a detection engine layer DELa in the detection engine layer DELa.

Meanwhile, if there is no detection engine layer DEL in the camera service container COAb, the processor 175 or the signal processing device 170 according to an embodiment of the present disclosure may add the detection engine layer DEL in the shared container SCOb to the camera service container COAb, and may access the video device VDC by using the detection engine DEG in the detection engine layer DEL. Accordingly, applications may be executed efficiently by using the shared container SCO.

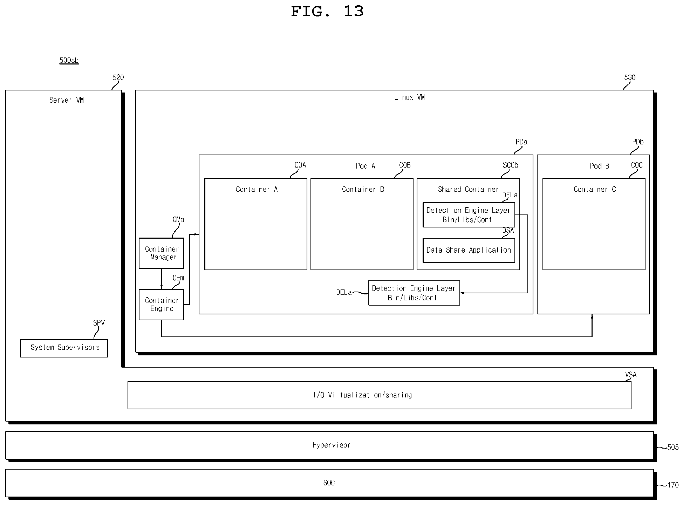

FIG. 13 is a diagram illustrating an example of dividing a plurality of service containers into groups.

Referring to the drawing, a system 500sb of FIG. 13 is similar to the system 500s of FIG. 11, but is different in that the first service container COA and the second service container COB among the plurality of service containers COA to COC, and the shared container SCOb are classified as a first group PDa, and the third service container COC is classified as a second group PDb.

That is, the processor 175 in the system 500sb executes the first and second virtual machines 520 and 530, and the second virtual machine 530 executes the plurality of service containers COA to COC and the shared container SCO.

However, as the first service container COA and the second service container COB belong to the first group PDa among the plurality of service containers COA to COC, the shared container SCO provides the shared layer only to the service containers COA and COB of the first group PDa among the plurality of service containers, without providing the shared layer to the service container COC of the second group PDb. Accordingly, applications in the same group PDa may be executed efficiently by using the shared container SCO.

In the drawing, the detection engine layer DELa is illustrated as an example of the shared layer.

That is, the shared container SCO may include the data share application DSA and the detection engine layer DELa as an example of the shared layer, and may provide the detection engine layer DELa as the shared layer to the first service container COA and the second service container COB. Accordingly, applications in the same group PDa may be executed efficiently by using the shared container SCO.

Meanwhile, the processor 175 may execute the container manager CMa for managing the at least one service container COA to COC, and the shared container SCO may execute the data share application DSA. Accordingly, applications may be executed efficiently by using the shared container SCO.

Meanwhile, the service container manager CMa may perform at least one of the following: lifecycle management, execution time management, management during execution, and management within groups, of the at least one service container COA to COC. Accordingly, service container-based application may be executed efficiently.

Meanwhile, the data share application DSA allows sharing, or restricts access to, a specific layer between containers COA and COB within a group PDa. Accordingly, service container-based application may be executed efficiently. Particularly, applications may be executed efficiently by using the shared container SCO.

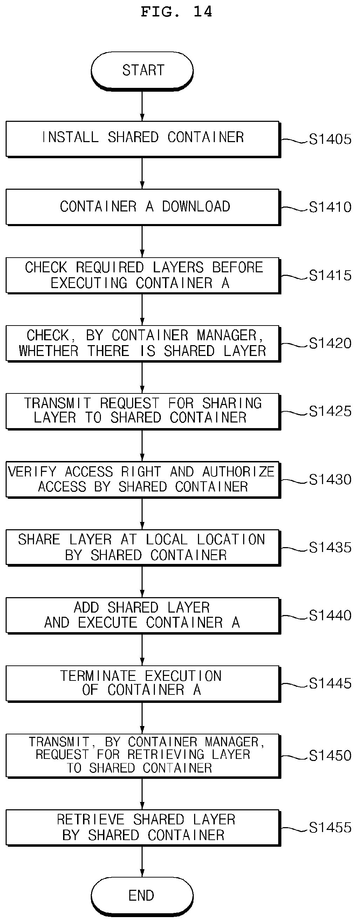

FIG. 14 is a flowchart illustrating operation of the signal processing device 170 according to an embodiment of the present disclosure.

Referring to the drawing, the processor 175 or the signal processing device 170 according to an embodiment of the present disclosure installs the shared container SCO (S1405).

For example, the processor 175 or the signal processing device 170 may install the shared container SCO in at least one of the first and second virtual machines 520 and 530.

Meanwhile, FIG. 11 illustrates an example in which the shared container SCO is installed in the second virtual machine 530.

Then, the processor 175 or the signal processing device 170 according to an embodiment of the present disclosure downloads the first service container COA from the server 60 and installs the first service container COA (S1410).

For example, the processor 175 or the signal processing device 170 may install the first service container COA in at least one of the first and second virtual machines 520 and 530.

Meanwhile, FIG. 11 illustrates an example in which the first service container COA is installed in the second virtual machine 530.

Meanwhile, the first service container COA installed may include the base image layer BLa and the writable layer WLa on the base image layer BLa.

Subsequently, the processor 175 or the signal processing device 170 may check layers in the first service container COA before executing the first service container COA (S1415).

Particularly, the container manager CMa may check whether there is a shared layer in the first service container COA (S1420).

Meanwhile, if there is no shared layer in the first service container COA, the processor 175 or the signal processing device 170 transmits a request for sharing the shared layer to the shared container SCO (S1425).

Meanwhile, in response to the request for sharing the shared layer, the shared container SCO in the processor 175 or the signal processing device 170 verifies an access right and authorizes access if the access right is valid (S1430).

Further, the shared container SCO in the processor 175 or the signal processing device 170 shares the shared layer at a local location (S1435).

In response, the processor 175 or the signal processing device 170 adds the shared layer to the first service container COA and executes the first service container COA including the added shared layer (S1440).

FIG. 10 illustrates an example of adding the first shared layer SLOb to the first service container COA and executing the first service container COA including the added first shared layer SLOb.

Then, the shared container SCO in the processor 175 or the signal processing device 170 terminates the execution of the first service container COA (S1445).

In response to the end of execution of the first service container COA, the container manager CMa transmits a request for retrieving the shared layer to the shared container SCO (S1450).

Accordingly, in response to the request for retrieving the shared layer, the shared container SCO in the processor 175 or the signal processing device 170 retrieves the shared layer SLO in the first service container COA (S1455).

In FIG. 10, in response to the request for retrieving the shared layer, the shared container SCO may retrieve the first shared layer SLOb in the first service container COA.

Accordingly, after the end of execution of the first service container COA, only the base image layer BLA and the writable layer WLa on the base image layer BLa may remain in the first service container COA.

Accordingly, service container-based application may be executed efficiently. Particularly, applications may be executed efficiently by using the shared container SCO. In addition, a storage space required for installing the service containers may be minimized.

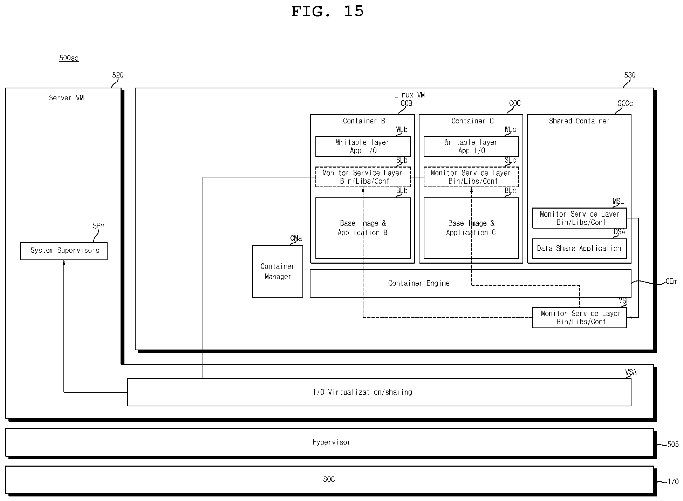

FIG. 15 is a diagram illustrating an example of a monitor service layer as a shared layer.

Referring to the drawing, a system 500sc of FIG. 15 is similar to the system 500s of FIG. 11, but is different in that during execution of the second service container COB and the third service container COC, the second service container COB and the third service container COC are executed after a monitor service layer MSL as a shared layer is added thereto.

The processor 175 in the system 500sc executes the first and second virtual machines 520 and 530, and the second virtual machine 530 executes the second service container COB, the third service container COC, and a shared container SCOc.

Meanwhile, if there is no monitor service layer MSL as the shared layer in the second service container COB and the third service container COC, the second virtual machine 520 may receive the monitor service layer MSL from the shared container SCOc and may add the monitor service layer MSL.

In this case, in response to a request for sharing the monitor service layer MSL, the shared container SCOc verifies an access right and authorizes access if the access right is valid.

Accordingly, the second service container COB may be executed after a monitor service layer SLb is added between the base image layer BLb and the writable layer WLb.

Similarly, the third service container COC may be executed after a monitor service layer SLc is added between the base image layer BLc and the writable layer WLc.

As a result, the shared container SCOc may include the monitor service layer MSL, and may provide the monitor service layer MSL to at least one service container COB and COC. Accordingly, applications may be executed efficiently by using the shared container SCOc.

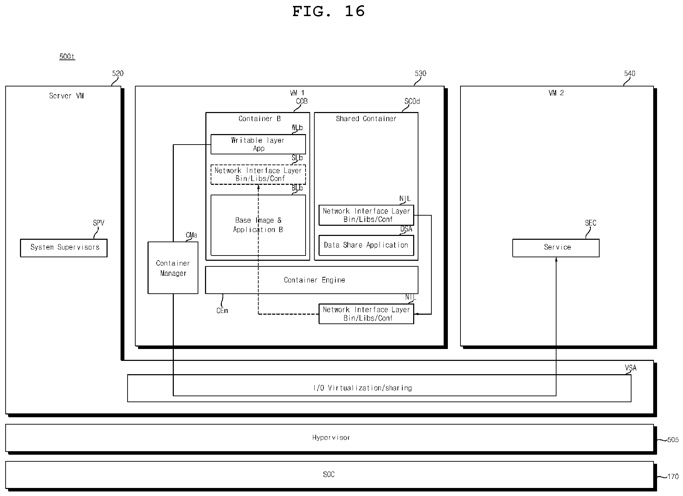

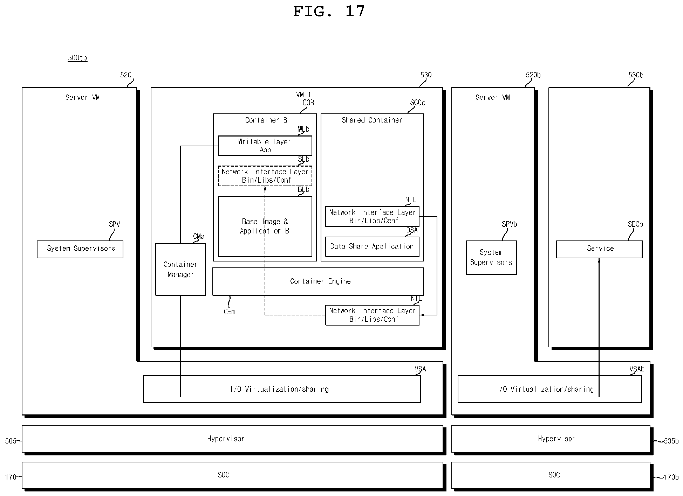

FIGS. 16 and 17 are diagrams illustrating an example of a network interface layer as a shared layer.

Referring to FIG. 16, a system 500t of FIG. 16 is similar to the system 500s of FIG. 11, but is different in that during execution of the second service container COB, the second service container COB is executed after a network interface layer NIL as a shared layer is added thereto.

The processor 175 in the system 500t executes the first and second virtual machines 520 and 530, and the second virtual machine 530 executes the second service container COB and the shared container SCOc.

Meanwhile, if there is no network interface layer NIL as the shared layer in the second service container COB, the second virtual machine 520 may receive the network interface layer NIL from a shared container SCOd and may add the network interface layer NIL.

In this case, in response to a request for sharing the network interface layer NIL, the shared container SCOd verifies an access right and authorizes access if the access right is valid.

Accordingly, the second service container COB may be executed after a network interface layer SLb is added between the base image layer BLb and the writable layer WLb.

As a result, the shared container SCOd may include the network interface layer NIL, and may provide the network interface layer NIL to at least one service container COB. Accordingly, applications may be executed efficiently by using the shared container SCOd.

Meanwhile, the shared container SCOd includes the network interface layer NIL and may provide the network interface layer NIL to at least one service container COB, and the service container COB provided with the network interface layer NIL may transmit data to another virtual machine 540 or another signal processing device 170b by using the network interface layer NIL. Accordingly, applications may be executed efficiently by using the shared container SCOd.

FIG. 16 illustrates an example in which the network interface layer NIL is added into the second service container COB, and the second service container COB transmits the network interface layer NIL as a shared layer to a specific service SEc in the third virtual machine 540 by using the container manager CMa and the I/O virtualization VSA. Accordingly, the shared layer may be transmitted to another virtual machine.

Referring to FIG. 17, a system 500tb of FIG. 17 is similar to the system 500t of FIG. 16, and particularly similar in that during execution of the second service container COB, the second service container COB is executed after the network interface layer NIL as a shared layer is added thereto.

However, the system 500tb of FIG. 17 is different from the system 500t of FIG. 16 in that a second server virtual machine 520b and a second guest virtual machine 530b further execute on a separate second signal processing device 170b.

Accordingly, the network interface layer NIL is added to the second service container COB, and the second service container COB transmits the network interface layer NIL as a shared layer to a specific service SEcb in the second guest virtual machine 530b, running on the second signal processing device 170b, by using the container manager CMa, the I/O virtualization VSA, and second I/O virtualization VSAb. Accordingly, the shared layer may be transmitted to another signal processing device 170b.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing device comprising a processor configured to perform signal processing for a display installed in a vehicle,
wherein the processor is configured to execute first and second virtual machines, the first virtual machine operating as a server virtual machine and the second virtual machine operating as a guest virtual machine,
wherein at least one of the first virtual machine and the second virtual machine is configured to:
execute a shared container and at least one service container on a container engine; and
add a shared layer in the shared container to the at least one service container before executing the at least one service container, execute the at least one service container after adding the shared layer, and retrieve the shared layer after terminating the execution of the at least one service container.

2. The signal processing device of claim 1, wherein the second virtual machine is configured to execute the shared container and at least one service container.

3. The signal processing device of claim 1, wherein the signal processing device is configured to:
in response to a first service container and a second service container being executed among the at least one service container, add a first shared layer and a second shared layer in the shared container to the first service container and the second service container, respectively; and
after said adding to the first service container and the second service container, execute the first service container and the second service container, and after terminating the execution of the first service container and the second service container, retrieve the first shared layer and the second shared layer.

4. The signal processing device of claim 1, wherein the signal processing device is configured to:
in response to a first service container and a second service container being executed among the at least one service container, add a common shared layer in the shared container to each of the first service container and the second service container; and
after adding the common shared layer, execute the first service container and the second service container, and after terminating the execution of the first service container and the second service container, retrieve the common shared layer.

5. The signal processing device of claim 1, wherein the signal processing device is configured to:
in response to there being no detection engine layer in a camera service container among the at least one service container, access a video device; and
in response to there being a detection engine layer in a camera service container among the at least one service container, access the video device by using a detection engine in the detection engine layer.

6. The signal processing device of claim 1, wherein in response to there being no detection engine layer in the camera service container among the at least one service container, the signal processing device is configured to add a detection engine layer in the shared container to the camera service container, and to access the video device by using the detection engine in the detection engine layer.

7. The signal processing device of claim 1, wherein the shared container is configured to provide the shared layer to only service containers of a first group among a plurality of service containers, without providing the shared layer to service containers of groups other than the first group.

8. The signal processing device of claim 1, wherein the processor is configured to execute a container manager for managing the at least one service container,
wherein the shared container is configured to execute a data share application.

9. The signal processing device of claim 8, wherein the service container manager is configured to perform at least one of lifecycle management, execution time management, management during execution, and management within a group of service containers, for the at least one service container.

10. The signal processing device of claim 8, wherein the data share application allows sharing, or restricts access to, a specific layer among a group of service containers.

11. The signal processing device of claim 1, wherein the shared container comprises a monitor service layer and provides the monitor service layer to the at least one service container.

12. The signal processing device of claim 1, wherein the shared container comprises a network interface layer and provides the network interface layer to the at least one service container,
wherein the service container provided with the network interface layer transmits data to another virtual machine or another signal processing device by using the network interface layer.

13. The signal processing device of claim 1, wherein the shared container provides the shared layer, including Augmented Reality (AR) data, Virtual Reality (VR) data, Mixed Reality (MR) data, to the at least one service container.

14. The signal processing device of claim 1, wherein the shared layer in the shared container comprises binary, library, and configuration files that are required for applications.

15. The signal processing device of claim 1, wherein the service container comprises a base image layer, the shared layer on the based image layer, and a writable layer on the shared layer.

16. The signal processing device of claim 1, wherein the processor is configured to execute a hypervisor and to execute first to third virtual machines on the hypervisor.

17. The signal processing device of claim 1, wherein the processor is configured to execute a container engine in the second virtual machine and to execute the service container on the container engine.

18. The signal processing device of claim 1, wherein the processor is configured to download the first service container from a server and install the first service container, and to add the shared layer to the first service container.

19. The signal processing device of claim 16, wherein the second virtual machine and the third virtual machine executed on different operating systems.

20. A vehicle display apparatus comprising:
a first display;
a second display; and
a signal processing device comprising a processor configured to perform signal processing for the first display and the second display,
wherein the signal processing device comprises the signal processing device of any one of claims 1 to 19.
